(19) **Europäisches Patentamt / European Patent Office / Office européen des brevets**

(11) **EP 4 557 211 A1**

(12) # EUROPEAN PATENT APPLICATION

(43) Date of publication:
**21.05.2025 Bulletin 2025/21**

(21) Application number: **24202376.0**

(22) Date of filing: **24.09.2024**

(51) International Patent Classification (IPC):
**G06T 3/4046** $^{(2024.01)}$ **G06T 3/4053** $^{(2024.01)}$

(52) Cooperative Patent Classification (CPC):
**G06T 3/4046; G06T 3/4053**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.11.2023 US 202363599877 P**

(71) Applicant: **MK Systems USA Inc.**
**Wilmington, DE 19808 (US)**

(72) Inventor: **FRANCISCO, Nelson**
**Wilmington, 19808 (US)**

(74) Representative: **Haseltine Lake Kempner LLP**
**One Portwall Square**
**Portwall Lane**
**Bristol BS1 6BH (GB)**

(54) **SYSTEMS AND METHODS FOR UPSCALING VISUAL CONTENT**

(57) Systems and methods for processing visual content are disclosed. In example processing of visual content that includes images, a lower-resolution image received. A first higher-resolution image is generated by applying spatial interpolation to the lower-resolution image. A refinement layer is generated by applying a neural network to the lower-resolution image, the neural network trained to predict a residue in the first higher-resolution image. A second higher-resolution image is generated by refining the first higher-resolution image using the refinement layer.

**FIG. 1**

**Description**

**FIELD**

This disclosure relates to visual content, and more particularly relates to upscaling visual content such as images and videos.

**BACKGROUND**

The proliferation of higher-resolution display technologies, such as 4K and 8K screens, has led to a gap between available higher-resolution content for such screens and vast archives of historical content produced and stored at lower resolutions. Historical content may include, for example, classic films, television shows, documentaries, and educational media. As consumers and institutions adopt higher-resolution displays, there is an increasing need to experience this historical content with the same clarity and detail afforded to newly created content. As well, even certain newly created content is available only at lower resolutions due to constraints of legacy recording equipment or constraints of transmission or storage resources.

Traditional upscaling methods, which often employ simple interpolation techniques, have proven inadequate to meet the quality expectations set by higher-resolution displays. Consequently, there is a need for different upscaling technologies.

**SUMMARY**

In accordance with an aspect, there is provided an image processing system including: a processing subsystem that includes one or more processors and one or more memories coupled with the one or more processors, the processing subsystem configured to cause the system to: receive a lower-resolution image; generate a first higher-resolution image by applying spatial interpolation to the lower-resolution image; generate a refinement layer by applying a neural network to the lower-resolution image, the neural network trained to predict a residue in the first higher-resolution image; and generate a second higher-resolution image by refining the first higher-resolution image using the refinement layer.

In such system, the spatial interpolation may include at least one of a bicubic interpolation, a linear interpolation, or a Lanczos interpolation.

In such system, the spatial interpolation may include spatiotemporal interpolation.

In such system, the neural network may include a convolutional neural network.

In such system, the neural network may be trained as part of a generative adversarial network.

In such system, the image may be a frame of video.

In accordance with another aspect, there is provided a computer-implemented method for processing images. The method includes: receiving a lower-resolution image; generating a first higher-resolution image by applying interpolation to the lower-resolution image; generating a residue refinement layer by applying a neural network to the lower-resolution image, the neural network trained to predict a residue in the first higher-resolution image; and generating a second higher-resolution image by refining the first higher-resolution image using the residue refinement layer.

The method may further include repeating said generating the first higher-resolution image, said generating the residue refinement layer, and said generating second higher-resolution for a plurality of video frames.

In such method, the refining may include summing the first higher-resolution image and the residue refinement layer.

The method may further include transmitting the second higher-resolution image to a client device.

The method may further include training the neural network.

In such method, the training may include downscaling a high-resolution image.

In such method, the training may include apply spatial interpolation to upscale the downscaled image.

In such method, the neural network may include a convolutional neural network.

In such method, the neural network may be trained as part of a generative adversarial network.

In accordance with a further aspect, there is is provided a non-transitory computer-readable medium or media having stored thereon machine interpretable instructions which, when executed by a processing system, cause the processing system to perform a method for for processing images. The method includes: receiving a lower-resolution image; generating a first higher-resolution image by applying interpolation to the lower-resolution image; generating a residue refinement layer by applying a neural network to the lower-resolution image, the neural network trained to predict a residue in the first higher-resolution image; and generating a second higher-resolution image by refining the first higher-resolution image using the residue refinement layer.

Many further features and combinations thereof concerning embodiments described herein will appear to those skilled in the art following a reading of the instant disclosure.

## BRIEF DESCRIPTION OF THE DRAWINGS

In the figures,

FIG. 1 is a network diagram of a network environment of an example over-the-top (OTT) media service including a content processing system, in accordance with an embodiment;

FIG. 2 is a schematic diagram of the content processing system of FIG. 1, in accordance with an embodiment;

FIG. 3 is a schematic diagram of a super-resolution engine of the content processing system of FIG. 1, in accordance with an embodiment;

FIG. 4 is a schematic diagram of upscaling performed by the super-resolution engine of FIG. 3, in accordance with an embodiment;

FIG. 5A is a graph of pixel-domain histograms for several images, in accordance with an embodiment;

FIG. 5B is a graph of residue-domain histograms for several images, in accordance with an embodiment;

FIG. 6 is a block diagram of a neural network architecture, in accordance with an embodiment;

FIG. 7, FIG. 8, and FIG. 9 each is a schematic diagram of training of a neural network of a super-resolution engine, in accordance with respective embodiments;

FIG. 10 is a flowchart of example operations performed at the content processing system of FIG. 1, in accordance with an embodiment;

FIG. 11A and FIG. 11B each show example images as processed by a super-resolution engine, in accordance with an embodiment; and

FIG. 12 is a schematic diagram for a computing device, in accordance with an embodiment.

These drawings depict exemplary embodiments for illustrative purposes, and variations, alternative configurations, alternative components and modifications may be made to these exemplary embodiments.

## DETAILED DESCRIPTION

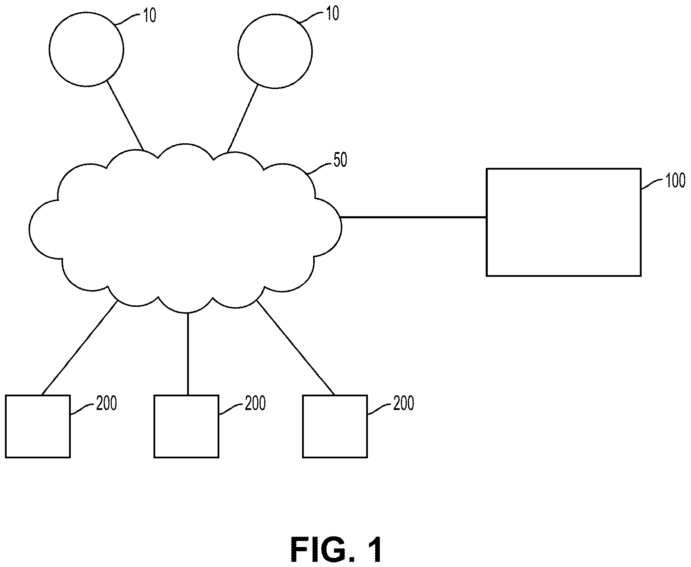

FIG. 1 is a diagram depicting a network environment of an example over-the-top (OTT) media service for delivering video content to end users, in accordance with an embodiment. The OTT media service includes a content processing system 100 that processes content (images, videos or a combination) in manners disclosed herein to facilitate streaming to end users. In particular, content processing system 100 processes content data to perform upscaling, whereby lower-resolution images or videos are converted into higher-resolution images or videos. Such upscaling may also be referred to as "super-resolution" processing.

In some embodiments, content processing system 100 performs upscaling by training a neural network to learn a distribution of a residue representing a difference between a conventional upscaling interpolation (e.g., spatial interpolation) applied to a lower-resolution image and a corresponding ground truth higher-resolution image, conditioned on the lower-resolution image.

In such embodiments, a trained neural network receives a given lower-resolution image as input and makes a prediction of the residue. Such prediction may be referred to herein as a "residue-domain" prediction, and processing using a neural network so trained may be referred to herein as "residue-domain" processing. The predicted residue can be added to, or otherwise combined with, a first higher-resolution image generated using a conventional interpolation to arrive at a second, refined, higher-resolution image. The above process may be repeated for multiple image frames of a video to perform upscaling on video data defining a plurality of frames.

Of note, "residue-domain" predictions can be distinguished from "pixel-domain" predictions wherein a neural network is trained to learn a distribution of a ground truth higher-resolution image, conditioned on a lower-resolution image.

Continuing to refer to FIG. 1, as depicted, content processing system 100 is interconnected with a plurality of content sources 10 and a plurality of client devices 200, by way of a communication network 50. Content processing system 100 receives content from one or more of content sources 10 and processes such content to facilitate streaming to end users at client devices 200. Such processing includes, for example, upscaling content in manners disclosed herein.

In the depicted embodiment, each content source 10 may be a conventional source of content data such as, for example, a video archive, a television station, or an Internet live stream. For example, a content source 10 may receive linear content by way of a satellite signal, a radio frequency (RF) antenna signal, or a dedicated portion of network 50. Content data may be received by content processing system 100 in various formats and bitrates, to be processed for streaming to client devices 200.

A content source 10 may provide lower-resolution content to content processing system 100, to be upscaled at content processing system 100 prior to streaming to client devices 200. A content source 10 may provide ground truth higher-resolution content to content processing system 100 for training of one or more neural networks (*e.g.*, at content processing system 100 or a separating training system). A content source 10 may provide both lower-resolution content and higher-resolution content, as required.

Each client device 200 is a device operable by an end user to play streamed video content. For example, a client device 200 may be a digital media player, a set-top box, a video game console, each connected to a display device for playing streamed content. A client device 200 may also be smart TV device or a personal computing device such as a laptop computer, a tablet computer, or a smartphone, each having an integrated display screen.

Network 50 may include a packet-switched network portion, a circuit-switched network portion, or a combination thereof. Network 50 may include wired links, wireless links such as radio-frequency links or satellite links, or a combination thereof. Network 50 may include wired access points and wireless access points. Portions of network 50 could be, for example, an IPv4, IPv6, X.25, IPX or similar network. Portions of network 50 could be, for example, a GSM, GPRS, 3G, LTE or similar wireless networks. Network 50 may include or be connected to the Internet. When network 50 is a public network such as the public Internet, it may be secured as a virtual private network.

In the depicted embodiment, portions of network 50 interconnecting content processing system 100 with client devices 200 are adapted for transmission of video streams over HTTP. In other embodiments, other protocols may be used for transmission of video streams.

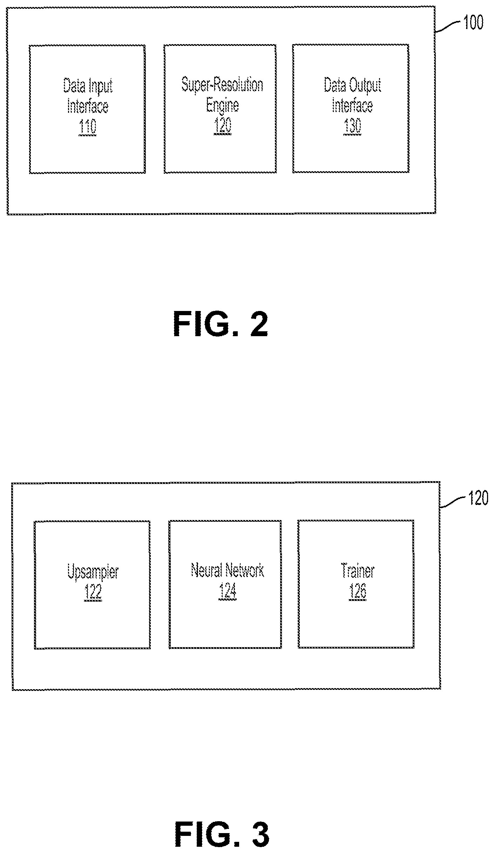

**FIG. 2** is a high-level schematic of content processing system 100, in accordance with an embodiment. As depicted, content processing system 100 includes a data input interface 110, a super-resolution engine 120, and a data output interface 130.

Data input interface 110 is configured to receive content data from a content source 10. In some embodiments data input interface 110 receives such content data via network 50. In some embodiments data input interface 110 receives such content data via HTTP or a similar protocol. In some embodiments, data input interface 110 includes one or more suitable decoders for decoding received content data. Such decoder(s) are matched to the encoding format of received content data (*e.g.*, Versatile, Video Codec (VVC), H.265/High Efficiency Video Coding (HEVC), H.264/Advanced Video Coding (AVC), MPEG-2, or the like).

Content data may include data defining lower-resolution images or video frames to be upscaled using super-resolution engine 120. Content data may include data defining ground truth higher-resolution image for training super-resolution engine 120.

Super-resolution engine 120 is configured to perform upscaling on lower-resolution content, and thereby generate higher-resolution content therefrom.

In some embodiments, super-resolution engine 120 is configured to generate 4K (3840 × 2160 pixel) higher-resolution content from 720P (1280 × 720 pixel) lower-resolution content. In some embodiments, the higher-resolution content may be 1080P (1920 × 1080 pixel) content, 5K (5120 × 2880 pixel) content, 8K (7680 × 4320 pixel content, or the like. In some embodiments, the lower-resolution content may be 1080P content, 480P (640 × 480 pixel) content, 240P (320 × 240 pixel) content, or the like. As will be appreciated, in various embodiments, super-resolution engine 120 may be configured to input and to output data of various resolutions and in various resolution ratios.

Data output interface 130 is configured to receive higher-resolution content, as upscaled by super-resolution engine 120. Data output interface 130 transmits such higher-resolution content to one or more client devices 200 via network 50. In some embodiments, data output interface 130 encodes or transcodes the higher-resolution content prior to transmission, *e.g.*, to be in a suitable encoding for playback at a client device 200 and/or in a suitable format for transmission. In some embodiments, data output interface 130 applies compression to the higher-resolution content. In some embodiments, data output interface 130 applies encryption to the higher-resolution content.

**FIG. 3** is a high-level schematic of super-resolution engine 120, in accordance with an embodiment. As depicted, super-resolution engine 120 includes an upsampler 122, a neural network 124, and a trainer 126. In some embodiments, trainer 126 may be omitted from super-resolution engine 120, and the functions of trainer 126 disclosed herein may be implemented at one or more systems separate from content processing system 100.

Upsampler 122 is configured to perform upscaling (also referred to as upsampling) on lower-resolution content by applying spatial interpolation. In the depicted embodiment, the spatial interpolation is bicubic interpolation. In other embodiments, another type of spatial interpolation may be performed such as Lanczos, bilinear, or the like. In some embodiments, spatiotemporal interpolation may be performed.

Neural network 124 is a neural network trained to learn a distribution of a residue representing a difference between interpolation performed by upsampler 122 on a lower-resolution image and a corresponding ground truth higher-resolution image, conditioned on the lower-resolution image. As such, neural network 124 is trained to map lower-resolution images to a corresponding residue. During operation, neural network 124 receives as input a lower-resolution image and provides as output a prediction of a residue.

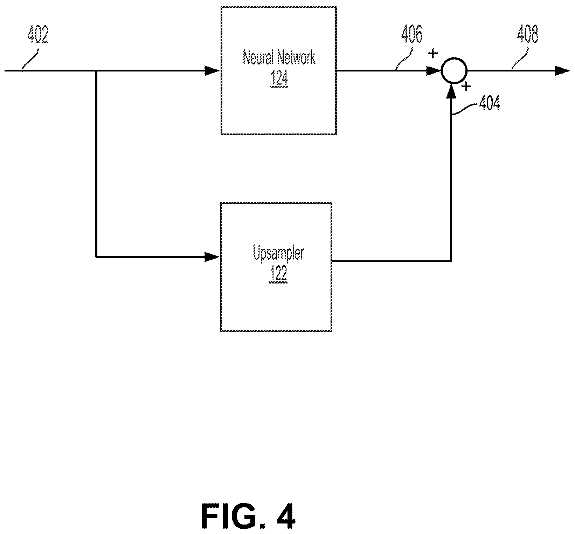

Upsampler 122 and neural network 124 cooperate to generate an upscaled (*e.g.*, super-resolution) image, in manners shown in the schematic diagram of **FIG. 4,** in accordance with an embodiment. As depicted, an input signal 402 representing a lower-resolution image is received. Input signal 402 is provided to both upsampler 122 and neural network 124. Upsampler 122 performs upscaling on input signal 402 to provide an upscaled signal 406 representing a first upscaled higher-resolution image. Neural network 124 receives input signal 402 and generates a residue signal 406 representing a predicted residue. This predicted residue is used as a refinement layer to refine the first upscaled higher-resolution image. As depicted, this refinement includes summing the residue signal 406 and upscaled signal 406 to generate a refined signal 408 representing a second upscaled higher-resolution image. In some embodiments, this summing is on a pixel-by-pixel basis, such that for each pixel, the pixel value of the first upscaled image is summed with the corresponding pixel value of the refinement layer.

The upscaling method performed using upsampler 122 and neural network 124 may also be described with reference to the following Equation (1):

$$\hat{y} = G(x) + \tilde{x} \qquad\qquad (1)$$

where $\hat{y}$ is final upscaled image (defined by signal 408), $G(x)$ is a refinement layer (defined by signal 406) generated by neural network 124, and $\tilde{x}$ is the input image $x$ upscaled by upsampler 122 (defined by signal 404).

As noted, neural network 124 is trained to make a prediction in the residue domain.

The upscaling methods of the present disclosure can be contrasted with methods in which a neural network learns a pixel-domain mapping from a lower-resolution image to a higher-resolution image, such that the neural network makes a prediction in the pixel domain, as represented by the following Equation (2):

$$\hat{y} = G(x) \qquad\qquad (2)$$

In some embodiments, the upscaling method performed using upsampler 122 and neural network 124 may also be described with reference to the following Equation (3):

$$\hat{y} = \alpha G(x) + \tilde{x} \qquad\qquad (3)$$

where $\alpha$ is a gain parameter that controls the relative contribution of $G(x)$ and $\tilde{x}$ to the final upscaled image. This gain parameter may be used to control how much of the refinement layer as generated by neural network 124 contributes to the final upscaled image.

In some embodiments, providing a neural network 124 trained to make a prediction in the residue domain may provide certain technical advantages. For example, in some data sets, the residue has mostly a high-pass nature, with the spectral content on DC and low frequencies close to zero. Further, in some data sets, the statistical distribution of residue pixels tends to be centered around zero (*i.e.*, zero mean) and have a more peaked distribution (lower standard deviation) than the distribution of pixels in the original image (*i.e.*, in the pixel domain).

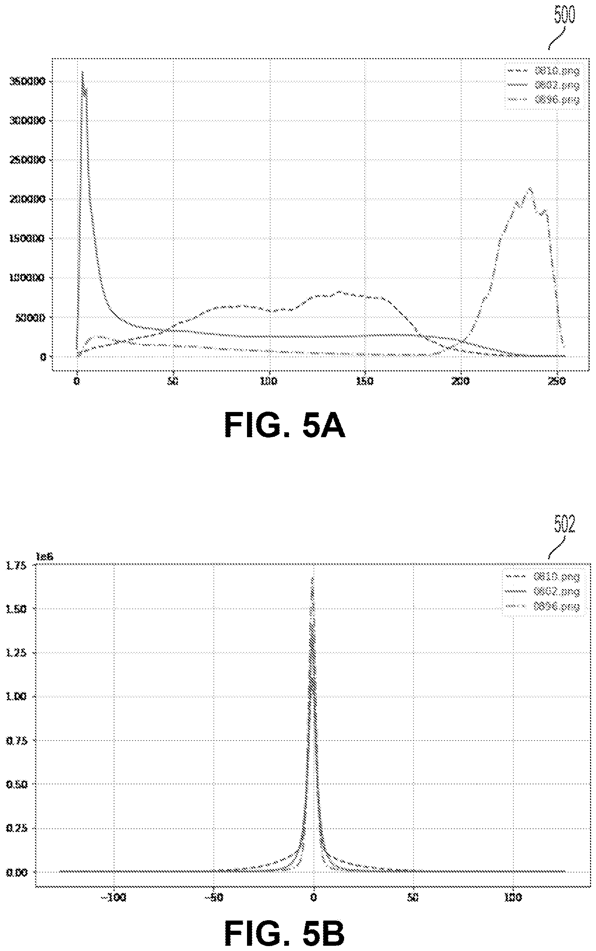

**FIG. 5A** depicts pixel-domain histograms of several ground truth higher-resolution images (0810.png, 0802.png, and 0896.png) from the DIV2K dataset, as described in R. Timofte et al. NTIRE 2018 challenge on single image super-resolution: Methods and results. In 2018 IEEEICVF Conference on Computer Vision and Pattern Recognition Workshops (CVPRW), pages 965-96511, 2018.

As shown, the statistics (*e.g.*, mean and variance) of these images differ considerably from one another. Such differences may mean that useful patterns learned from a set of images may not suit others, with the performance of a neural network trained in the pixel domain being constrained if the training dataset is not fully representative of all possible solutions. Such constraints may introduce artifacts in some images and/or increase the risk of mode collapse whereby the neural network maps only to a subset of a target distribution, rather than the full distribution.

**FIG. 5B** depicts residue-domain histograms corresponding to the images of **FIG. 5A,** showing for each image, a residue between an upscaled image obtained by bicubic interpolation and a ground truth higher-resolution image. As shown, the statistics of the resulting residue histograms are much more consistent. The table below summarizes these statistics, namely mean $H_\mu$ and standard deviation $H_\sigma$ of the histogram $H$ for 3 different images in the pixel-domain and the residue-domain.

| | Pixel Domain | | Residue Domain | |
|---|---|---|---|---|
| Image | $H_\mu$ | $H_\sigma$ | $H_\mu$ | $H_\sigma$ |
| 802 | 71.87 | 66.94 | -0.0016 | 5.60 |
| 810 | 111.27 | 44.74 | 0.0006 | 13.02 |
| 896 | 197.62 | 71.19 | -0.0021 | 5.36 |

In some datasets, the distribution in the residue domain (of the refinement layer) may be easier for neural network 124 to learn compared to the distribution in the pixel domain. In some embodiments, for such datasets, training neural network 124 in the residue domain may provide one or more of the following technical effects: less dependence on the particular training dataset used, fewer nodes required, less prone to colour shifts, less likely to suffer from mode collapse, and/or less likely to introduce artifacts through batch normalization, which may make neural network 124 overall easier to train.

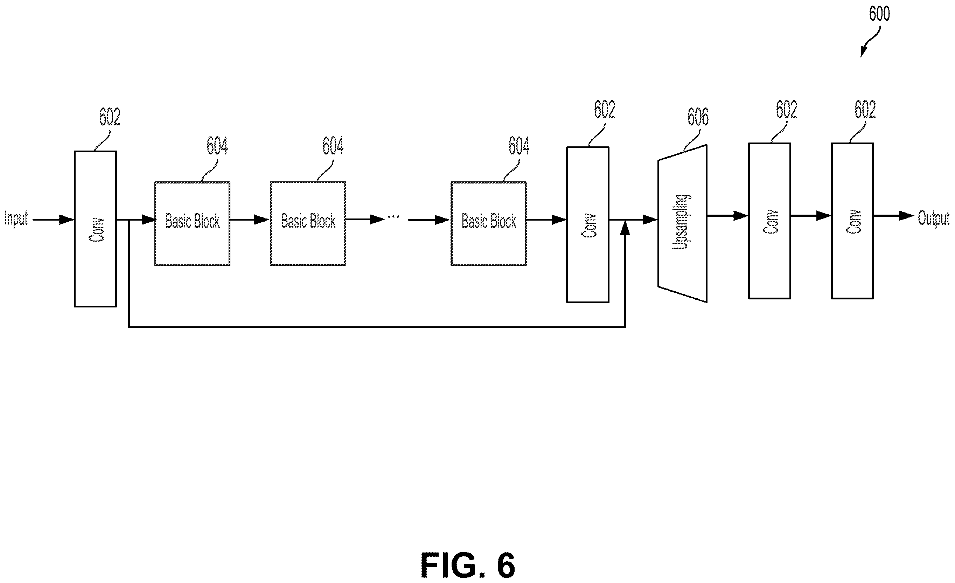

FIG. 6 is a block diagram of an example architecture of neural network 124, in accordance with an embodiment. As shown, neural network 124 may include a plurality of convolutional layers 602 interconnected with a plurality of basic blocks 604, and an upsampling layer 606.

In some embodiments, neural network 124 has an architecture based on the generator of an SR-GAN network, as described in C. Ledig, L. Theis, F. Huszár, J. Caballero, A. Cunningham, A. Acosta, A. Aitken, A. Tejani, J. Totz, Z. Wang, and W. Shi. Photo-realistic single image super-resolution using a generative adversarial network. In 2017 IEEE Conference on Computer Vision and Pattern Recognition (CVPR), pages 105-114, 2017.

In some embodiments, the architecture of FIG. 6 is modified to implement one or more basic blocks 604 as Residual in Residual Dense Blocks (RRDB) as described in X. Wang, K. Yu, S. Wu, J. Gu, Y. Liu, C. Dong, Y. Qiao, and C. C. Loy. Esrgan: Enhanced super-resolution generative adversarial networks. In Computer Vision - ECCV 2018 Workshops, pages 63-79, Cham, 2019. Springer International Publishing.

In some embodiments, the architecture of FIG. 6 is modified to implement one or more basic blocks 604 as Residual Blocks (RB) as described in K. He, X. Zhang, S. Ren, and J. Sun. Deep residual learning for image recognition. In 2016 IEEE Conference on Computer Vision and Pattern Recognition (CVPR), pages 770- 590, 2016. In some embodiments, RBs are used with batch normalization (BN). In some embodiments, RBs are used without BN.

In the depicted embodiment, neural network 124 is a convolutional neural network. In other embodiments, another type of neural network may be used.

In the depicted embodiment, only one neural network 124 is shown. However, in other embodiments, there may be multiple neural networks 124, working in concert.

In some embodiments, neural network 124 is a generator of a generative adversarial network (GAN). In such embodiments, neural network 124 may be trained using a GAN discriminator, as detailed herein.

Returning to FIG. 3, trainer 126 is configured to train neural network 124, in accordance in an embodiment. In particular, trainer 126 trains neural network 124 to learn a distribution of a residue, conditioned on a lower-resolution image.

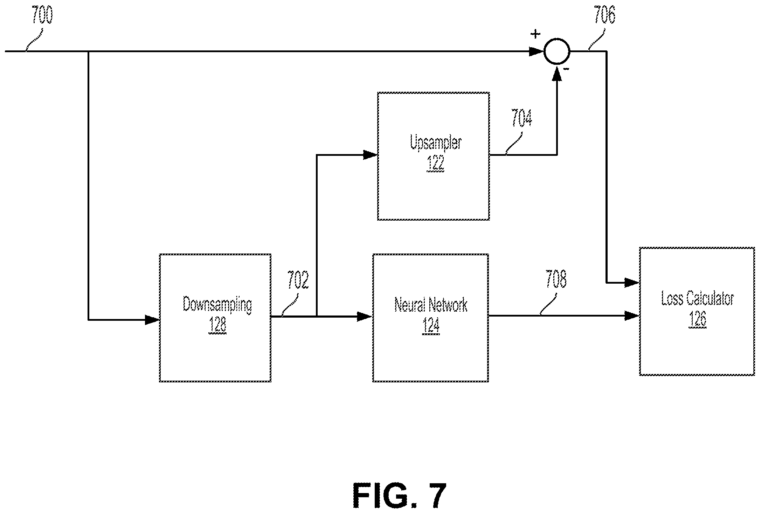

FIG. 7 is a schematic diagram of training performed by trainer 126 on neural network 124, in accordance with an embodiment. Trainer 126 uses a plurality of ground truth higher-resolution images (and/or patches of such images) to perform training.

As depicted, a ground truth signal 700 representing a ground truth higher-resolution image is received. Ground truth signal 700 is provided to a downsampler 128 to apply downscaling (also called downsampling) to the ground truth image. In the depicted embodiment, downsampler 128 applies downscaling using bicubic downsampling. In other embodiments, downsampler 128 applies another type of downscaling such as Lanczos, bilinear, or the like. The factor by which downsampler 128 applies downscaling matches the factor of the desired upscaling.

Downssampler 128 outputs a downscaled signal 702 representing a downscaled version of the ground truth image. Downscaled signal 702 is provided to both upsampler 122 and neural network 124. Upsampler 122 performs upscaling on downscaled signal 702 to generate an upscaled signal 704 representing a version of the ground truth image upscaled using interpolation. In particular, upscaled signal 704 represents a version of the ground truth image having the same resolution as the original ground truth image (signal 700).

Upscaled signal 704 is subtracted from ground truth signal 700 to arrive at a residue signal 706, which represents a residue between the original ground truth image and the ground truth image downscaled and then upscaled using interpolation. Neural network 124 maps downscaled signal 702 to a predicted residue signal 708 representing a prediction of the residue.

Loss calculator 126 receives residue signal 706 and predicted residue signal 708 and calculates a loss. In the depicted embodiment, the loss is calculated as a $L_1$-norm loss. In some embodiments, the loss is calculated as a $L_n$-norm

loss or a suitable variation thereof. In some embodiments, the loss is calculated as another type of dual reference loss. In some embodiments, the loss is based on a PSNR (Peak Signal-to-Noise Ratio) or similar metric.

In some embodiments, the loss is calculated as a perceptual loss. In some embodiments, the predicted residue signal 708 is added to an upscaled signal 704 to calculate perceptual loss on a reconstructed image. In some embodiments, a perceptual loss is calculated on the predicted residue signal 708 itself.

Trainer 126 trains neural network 124 by adjusting the parameters of neural network 124 to minimize the calculated loss. In the depicted embodiment, these parameters are adjusted using back propagation. In some embodiments, back propagation may be used in combination with gradient descent.

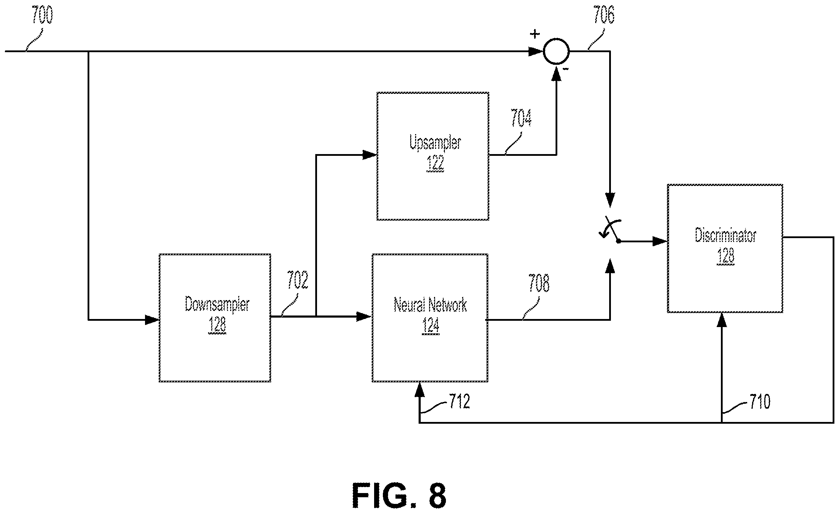

**FIG. 8** is a schematic diagram of training performed by trainer 126 on neural network 124 that is a GAN generator, in accordance with an embodiment. Training is similar to that described with reference to **FIG. 7**; however, loss calculator 126 is replaced by a GAN discriminator 128, namely, a neural network trained to distinguish between residue signals 706 and predicted residue signals 708.

During training, discriminator 128 is alternatingly presented with residue signals 706 and predicted residue signals 708 generated by neural network 124, and learns to determine the likelihood of a given residue being a residue signal 706 or a predicted residue signal 708. Training discriminator 128 and neural network 124 (as generator) at the same time provides synergistic effects. While discriminator 128 gets better at distinguishing between residue signals 706 and predicted residue signals 708, neural network 124 becomes better at generating more credible predicted residue signals 708 to trick discriminator 128. Analogously, the better neural network 124 becomes at generating predicted residue signals 708, the more accurate discriminator 128 must become at distinguishing them from residue signals 706. As shown in **FIG. 8**, discriminator 128 provides error feedback signal 710 to itself when it makes an incorrect determination, and provides error feedback signal 712 to neural network 124 when it correctly identifies a predicted residue 708 as such.

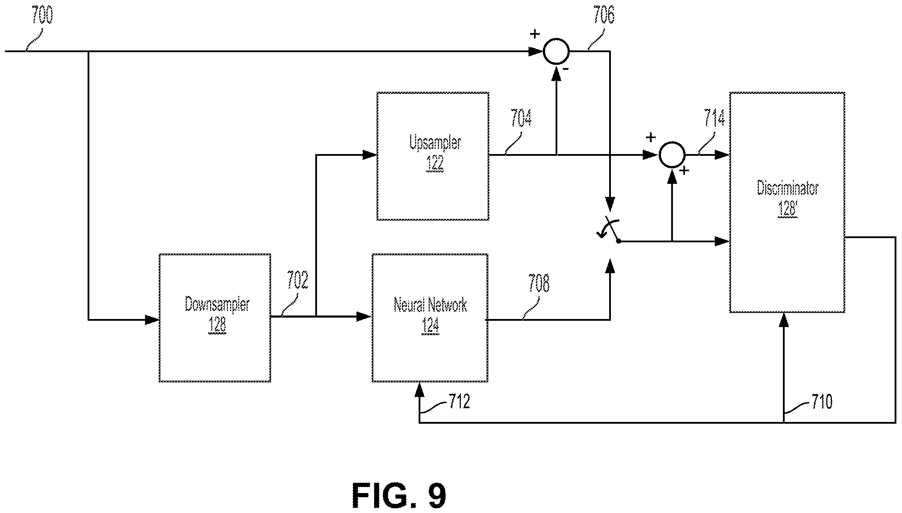

**FIG. 9** is a schematic diagram of training performed by trainer 126 on neural network 124 that is a GAN generator that utilizes a pre-trained network, in accordance with an embodiment. Training is similar to that described with reference to **FIG. 8**; however, GAN discriminator 128 is replaced by a GAN discriminator 128'.

GAN discriminator 128' (like GAN discriminator 128) is a neural network trained to distinguish between residue signals 706 and predicted residue signals 708. Unlike GAN discriminator 128, GAN discriminator 128' uses a pre-trained network for feature extraction that has been trained in the pixel domain. The pre-trained network may be, for example, a VGG network as described in Karen Simonyan and Andrew Zisserman. Very deep convolutional networks for large-scale image recognition. In International Conference on Learning Representations, 2015.

To utilize such a pre-trained VGG network for feature extraction, a pixel-domain signal 714 representing a reconstruction of the original ground truth image is obtained by summing residue signal 706 (or alternatingly, predicted residue signal 708) and upscaled signal 704.

The embodiment depicted in **FIG. 9** may implement the following loss function that is a weighted sum of a perceptual, a relativistic discriminator, and a simple content loss:

$$L_G = L_{percep} + \lambda L_G^{Ra} + \eta L_1 \qquad (4)$$

The perceptual loss $L_{percep}$ is defined by the features before activation from a pre-trained 19-layer VGG network. Because the pre-trained VGG network has been trained for feature recognition (including texture recognition) on pixel-domain data, the sum of the output of neural network 124 $G(x_i)$ and the upscaled out of upsampler 124 ($\tilde{x}_i$) is used as the VGG network input, so that for a given training image (or patch) i:

$$L_{percep} = \mathbb{E}_{x_i}[VGG(G(x_i) + \tilde{x}_i)] \qquad (5)$$

The content loss $L_1$ evaluates the 1-norm distance between the predicted residue $G(x_i)$ and the ground truth residue (y - $\tilde{x}_i$):

$$L_1 = \mathbb{E}_{x_i}\|G(x_i) - (y - \tilde{x}_i)\|_1 \qquad (6)$$

The relativistic adversarial loss $L_G^{Ra}$ is calculated as:

$$L_G^{Ra} = -\mathbb{E}_{x_r}\big[\log\big(1 - D_{Ra}(x_r, x_f)\big)\big]$$
$$-\mathbb{E}_{x_f}\big[\log\big(D_{Ra}(x_f, x_r)\big)\big] \qquad (7)$$

$$D_{Ra}(x_r, x_f) = \sigma\left(C(x_r) - \mathbb{E}_{x_f}[C(x_f)]\right),$$

where $x_r$ is a ground truth residue defined as $x_r = (y - \bar{x}_i)$, $x_f = G(x_i)$ and with $\sigma$ being the sigmoid function so that $\sigma C(x)$ is a standard, non-relativistic discriminator such as may be used in an SR-GAN network.

The coefficients $\lambda$ and $\eta$ allow adjustment of the relative weight of each loss terms in the final adversarial loss value.

As noted, in some embodiments, trainer 126 may be omitted from super-resolution engine 120. Training of neural network 124 may be performed at one or more systems separate from content processing system 100. In such embodiments, content processing model 100 may receive one or more trained neural network models for implementing neural network 124.

Each of data input interface 110, super-resolution engine 120, and data output interface 130 may be implemented using conventional programming languages such as Java, J#, C, C++, C#, Perl, Visual Basic, Ruby, Scala, etc. These components of system 100 may be in the form of one or more executable programs, scripts, routines, statically/dynamically linkable libraries, or the like.

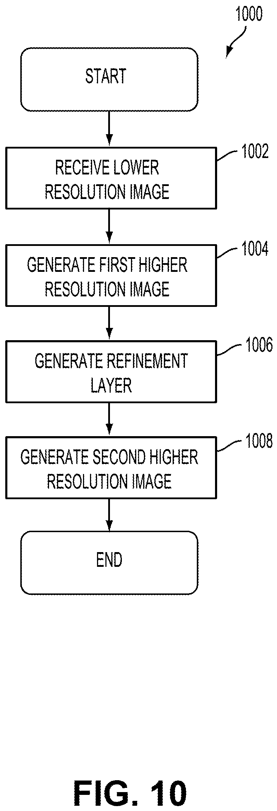

The operation of content processing system 100 is further described with reference to the flowchart depicted in **FIG. 10.** Content processing system 100 performs the example operations depicted at blocks 1000 and onward, in accordance with an embodiment.

At block 1002, a lower-resolution image is received (*e.g.*, at data input interface 110) for processing by super-resolution engine 120.

At block 1004, a first higher-resolution image is generated by upsampler 122 applying spatial interpolation to the lower-resolution image.

At block 1006, a refinement layer is generated by applying neural network 124 to the input data, where neural network 124 is trained to predict a residue in the first higher-resolution image.

At block 1008, a second higher-resolution image is generated by refining the first higher-resolution image using the refinement layer. For example, the refinement layer may be used to modify the first higher-resolution image. For example, the refinement layer may be summed with the first higher-resolution image to arrive at the second higher-resolution image.

In the case of video content, blocks 1002 through 1008 may be repeated for a plurality of video frames.

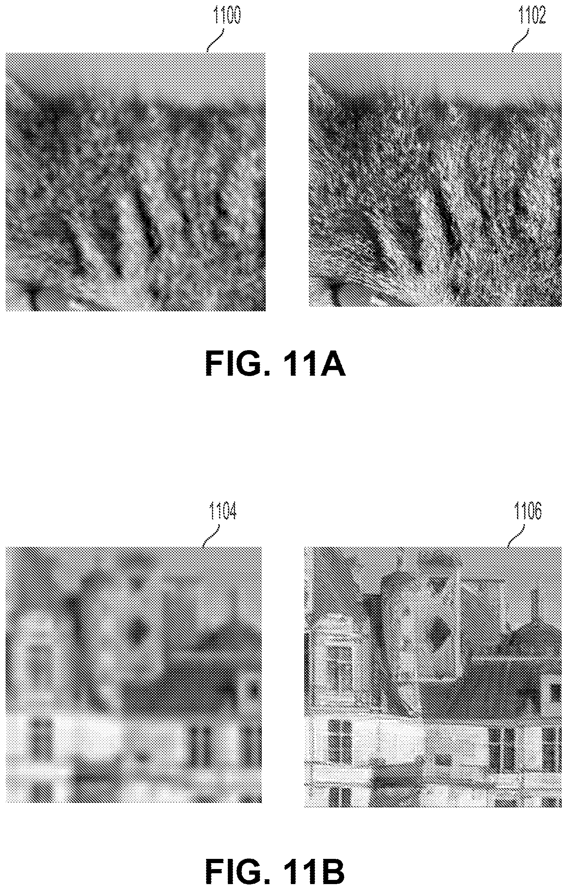

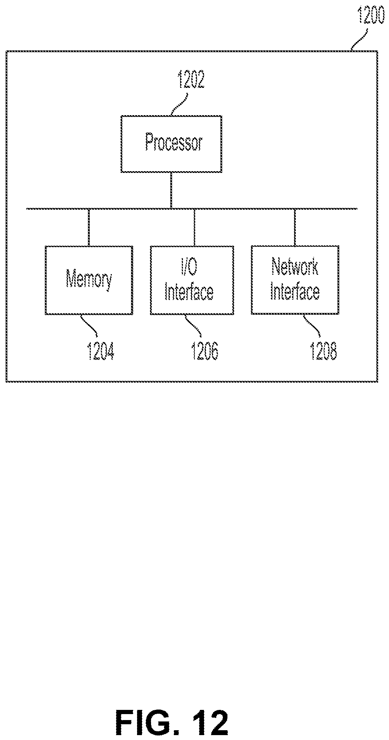

**FIG. 11A** depicts a first higher-resolution image 1100 and a second higher-resolution image 1102 (as refined) for a given sample image. **FIG. 12A** depicts a first higher-resolution image 1104 and a second higher-resolution image 1106 (as refined), for another given sample image.

It should be understood that steps of one or more of the blocks depicted in **FIG. 10** may be performed in a different sequence or in an interleaved or iterative manner. Further, variations of the steps, omission or substitution of various steps, or additional steps may be considered.

In the depicted embodiment, upscaling for a given higher-resolution image may be performed using a single lower-resolution image as input.

The table below summarizes performance of content processing system 100 (in the residue domain) compared to a conventional bicubic upsampling process and conventional pixel-domain processes, across several neural network architectures.

| Method | Basic Block | #Layers | PSNR ↑ | SSIM ↑ | LR-PSNR ↑ | LPIPS ↓ |
|---|---|---|---|---|---|---|
| Bicubic | - | - | 26.693 | 0.766 | 38.697 | 0.421 |
| Pixel | RRDB | 23 | 27.266 | 0.776 | 41.917 | 0.119 |
| Residual | RRDB | 23 | 27.469 | 0.781 | 47.295 | 0.113 |
| Pixel | RB w/o BN | 16 | 26.621 | 0.759 | 40.723 | 0.132 |
| Residual | RB w/o BN | 16 | 27.084 | 0.773 | 46.886 | 0.129 |
| Residual | RB w BN | 16 | 27.181 | 0.776 | 46.908 | 0.125 |

In addition to the widely used PSNR and SSIM metrics, the above table also includes the LR-PSNR and LPIPS metrics. LR-PSNR is computed as the PSNR between a down-scaled super-resolution image and an input lower-resolution image, as described in A. Lugmayr, M. Danelljan, L. V. Gool, and R. Timofte. Sr-flow: Learning the super-resolution space with normalizing flow. In Computer Vision - ECCV 2020: 16th European Conference, Glasgow, UK, August 23-28, 2020, Proceedings, Part V, page 715-732, 2020. LPIPS is a metric for computing perceptual similarity between ground truth and super-resolution images, as described in in R. Zhang, P. Isola, A. Efros, E. Shechtman, and O.

Wang. The unreasonable effectiveness of deep features as a perceptual metric. In 2018 IEEE/CVF Conference on Computer Vision and Pattern Recognition, pages 586-595, 2018. As shown in the above table, each metric is improved when using residue-domain processing compared to pixel-domain processing.

In the embodiments described above, upscaling in manners disclosed herein is performed at content processing system 100, which transmits the upscaled content to one or more client devices 200 for playback. In other embodiments, upscaling in manners disclosed herein may be performed at a client device 200. In such embodiments, lower-resolution content is transmitted by content processing system 100 to a client device 200, and upscaling is performed the client device 200 prior to playback. In yet other embodiments, upscaling in manners disclosed herein is performed at an intermediate device such as a residential gateway. Conveniently, when lower-resolution content is transmitted by content processing system 100 instead of upscaled higher-resolution content, transmission resources may be conserved.

FIG. 12 is a schematic diagram of computing device 1200 which may be used to implement content processing system 100, in accordance with an embodiment. Computing device 1200 may also be used to implement one or more client devices 200.

As depicted, computing device 1200 includes at least one processor 1202, at least one memory 1204, at least one I/O interface 1206, and at least one network interface 1208. At least one processors 1202 and at least one memories 1204 form a processing subsystem of computing device 1200, which may be configured to cause computing device 1200 to perform operations of content processing system 100 disclosed herein.

Each processor 1202 may be, for example, any type of general-purpose microprocessor or microcontroller, a digital signal processing (DSP) processor, an integrated circuit, a field programmable gate array (FPGA), a reconfigurable processor, a programmable read-only memory (PROM), or any combination thereof.

At least one memories 1204 may include a suitable combination of any type of computer memory that is located either internally or externally such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like.

Each I/O interface 1206 enables computing device 1200 to interconnect with one or more input devices, such as a keyboard, mouse, camera, touch screen and a microphone, or with one or more output devices such as a display screen and a speaker.

Each network interface 1208 enables computing device 1200 to communicate with other components, to exchange data with other components, to access and connect to network resources, to serve applications, and perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX), SS7 signaling network, fixed line, local area network, wide area network, and others, including any combination of these.

For simplicity only, one computing device 1200 is shown but system 100 may include multiple computing devices 1200. The computing devices 1200 may be the same or different types of devices. The computing devices 1200 may be connected in various ways including directly coupled, indirectly coupled via a network, and distributed over a wide geographic area and connected via a network (which may be referred to as "cloud computing").

For example, a computing device 1200 may be a server, network appliance, set-top box, embedded device, computer expansion module, personal computer, laptop, personal data assistant, cellular telephone, smartphone device, UMPC tablets, video display terminal, gaming console, or any other computing device capable of being configured to carry out the methods described herein.

The foregoing discussion provides many example embodiments of the inventive subject matter. Although each embodiment represents a single combination of inventive elements, the inventive subject matter is considered to include all possible combinations of the disclosed elements. Thus if one embodiment comprises elements A, B, and C, and a second embodiment comprises elements B and D, then the inventive subject matter is also considered to include other remaining combinations of A, B, C, or D, even if not explicitly disclosed.

The embodiments of the devices, systems and methods described herein may be implemented in a combination of both hardware and software. These embodiments may be implemented on programmable computers, each computer including at least one processor, a data storage system (including volatile memory or non-volatile memory or other data storage elements or a combination thereof), and at least one communication interface.

Program code is applied to input data to perform the functions described herein and to generate output information. The output information is applied to one or more output devices. In some embodiments, the communication interface may be a network communication interface. In embodiments in which elements may be combined, the communication interface may be a software communication interface, such as those for inter-process communication. In still other embodiments, there may be a combination of communication interfaces implemented as hardware, software, and combination thereof.

Throughout the foregoing discussion, numerous references will be made regarding servers, services, interfaces, portals, platforms, or other systems formed from computing devices. It should be appreciated that the use of such terms is deemed to represent one or more computing devices having at least one processor configured to execute software instructions stored on a computer readable tangible, non-transitory medium. For example, a server can include one or more computers operating as a web server, database server, or other type of computer server in a manner to fulfill described roles, responsibilities, or functions.

The technical solution of embodiments may be in the form of a software product. The software product may be stored in a non-volatile or non-transitory storage medium, which may be a compact disk read-only memory (CD-ROM), a USB flash disk, or a removable hard disk. The software product includes a number of instructions that enable a computer device (personal computer, server, or network device) to execute the methods provided by the embodiments.

The embodiments described herein are implemented by physical computer hardware, including computing devices, servers, receivers, transmitters, processors, memory, displays, and networks. The embodiments described herein provide useful physical machines and particularly configured computer hardware arrangements.

Of course, the above described embodiments are intended to be illustrative only and in no way limiting. The described embodiments are susceptible to many modifications of form, arrangement of parts, details and order of operation. The disclosure is intended to encompass all such modification within its scope, as defined by the claims.

For the avoidance of doubt, the present invention includes the subject-matter as defined in the following numbered paragraphs:

1. An image processing system including:
a processing subsystem that includes one or more processors and one or more memories coupled with the one or more processors, the processing subsystem configured to cause the system to:

   receive a lower-resolution image;

   generate a first higher-resolution image by applying spatial interpolation to the lower-resolution image;

   generate a refinement layer by applying a neural network to the lower-resolution image, the neural network trained to predict a residue in the first higher-resolution image; and

   generate a second higher-resolution image by refining the first higher-resolution image using the refinement layer.

2. The image processing system of paragraph 1, wherein the spatial interpolation includes at least one of a bicubic interpolation, a linear interpolation, or a Lanczos interpolation.

3. The image processing system of paragraph 1, wherein the spatial interpolation includes spatiotemporal interpolation.

4. The image processing system of paragraph 1, wherein the neural network includes a convolutional neural network.

5. The image processing system of paragraph 1, wherein the neural network is trained as part of a generative adversarial network.

6. The image processing system of paragraph 1, wherein the image is a frame of video.

7. A computer-implemented method for processing images, the method comprising:

   receiving a lower-resolution image;

   generating a first higher-resolution image by applying interpolation to the lower-resolution image;

   generating a residue refinement layer by applying a neural network to the lower-resolution image, the neural network trained to predict a residue in the first higher-resolution image; and

   generating a second higher-resolution image by refining the first higher-resolution image using the residue refinement layer.

8. The computer-implemented method of paragraph 7, further comprising:
repeating said generating the first higher-resolution image, said generating the residue refinement layer, and said generating second higher-resolution for a plurality of video frames.

9. The computer-implemented method of paragraph 7, wherein said refining includes summing the first higher-resolution image and the residue refinement layer.

10. The computer-implemented method of paragraph 7, further comprising transmitting the second higher-resolution image to a client device.

11. The computer-implemented method of paragraph 7, further comprising training the neural network.

12. The computer-implemented method of paragraph 12, wherein said training includes downscaling a high-resolution image.

13. The computer-implemented method of paragraph 12, wherein said training includes apply spatial interpolation to upscale the downscaled image.

14. The computer-implemented method of paragraph 7, wherein the neural network includes a convolutional neural network.

15. The computer-implemented method of paragraph 7, wherein the neural network is trained as part of a generative adversarial network.

16. A non-transitory computer-readable medium or media having stored thereon machine interpretable instructions which, when executed by a processing system, cause the processing system to:

receive a lower-resolution image;

generate a first higher-resolution image by applying interpolation to the lower-resolution image;

generate a residue refinement layer by applying a neural network to the lower-resolution image, the neural network trained to predict a residue in the first higher-resolution image; and

generate a second higher-resolution image by refining the first higher-resolution image using the residue refinement layer.

17. The non-transitory computer-readable medium or media of paragraph 16, wherein the instructions further cause the processing system to repeat said generating the first higher-resolution image, said generating the residue refinement layer, and said generating second higher-resolution for a plurality of video frames.

18. The non-transitory computer-readable medium or media of paragraph 16, wherein said refining includes summing the first higher-resolution image and the residue refinement layer.

19. The non-transitory computer-readable medium or media of paragraph 16, wherein the instructions further cause the processing system to transmit the second higher-resolution image to a client device.

20. The non-transitory computer-readable medium or media of paragraph 16, wherein the instructions further cause the processing system to train the neural network.

**Claims**

1. An image processing system including:
a processing subsystem that includes one or more processors and one or more memories coupled with the one or more processors, the processing subsystem configured to cause the system to:

receive a lower-resolution image;

generate a first higher-resolution image by applying spatial interpolation to the lower-resolution image;

generate a refinement layer by applying a neural network to the lower-resolution image, the neural network trained to predict a residue in the first higher-resolution image; and

generate a second higher-resolution image by refining the first higher-resolution image using the refinement layer.

2. The image processing system of claim 1, wherein the spatial interpolation includes at least one of a bicubic interpolation, a linear interpolation, or a Lanczos interpolation.

3. The image processing system of claim 1, wherein the spatial interpolation includes spatiotemporal interpolation.

4. The image processing system of claim 1, wherein the neural network includes a convolutional neural network.

5. The image processing system of claim 1, wherein the neural network is trained as part of a generative adversarial network.

6. The image processing system of claim 1, wherein the image is a frame of video.

7. A computer-implemented method for processing images, the method comprising:

receiving a lower-resolution image;

generating a first higher-resolution image by applying interpolation to the lower-resolution image;

generating a residue refinement layer by applying a neural network to the lower-resolution image, the neural network trained to predict a residue in the first higher-resolution image; and

generating a second higher-resolution image by refining the first higher-resolution image using the residue refinement layer.

8. The computer-implemented method of claim 7, further comprising: repeating said generating the first higher-resolution image, said generating the residue refinement layer, and said generating second higher-resolution for a plurality of video frames.

9. The computer-implemented method of claim 7, wherein said refining includes summing the first higher-resolution image and the residue refinement layer.

10. The computer-implemented method of claim 7, further comprising transmitting the second higher-resolution image to a client device.

11. The computer-implemented method of claim 7, further comprising training the neural network.

12. The computer-implemented method of claim 11, wherein said training includes downscaling a high-resolution image, wherein said training includes apply spatial interpolation to upscale the downscaled image.

13. The computer-implemented method of claim 7, wherein the neural network includes a convolutional neural network.

14. The computer-implemented method of claim 7, wherein the neural network is trained as part of a generative adversarial network.

15. A non-transitory computer-readable medium or media having stored thereon machine interpretable instructions which, when executed by a processing system, cause the processing system to:

receive a lower-resolution image;

generate a first higher-resolution image by applying interpolation to the lower-resolution image;

generate a residue refinement layer by applying a neural network to the lower-resolution image, the neural network trained to predict a residue in the first higher-resolution image; and

generate a second higher-resolution image by refining the first higher-resolution image using the residue refinement layer.

FIG. 1

**FIG. 2**

**FIG. 3**

FIG. 4

**FIG. 5A**

**FIG. 5B**

**FIG. 6**

EP 4 557 211 A1

FIG. 7

700

706

+ −

704

Upsampler
122

708

Neural Network
124

702

Downsampling
128

Loss Calculator
126

FIG. 8

Discriminator 126'

Upsampler 122

Neural Network 124

Downsampler 128

700
702
704
706
708
710
712
714

FIG. 9

1000

```
                    ┌─────────────────┐
                    │      START       │
                    └────────┬────────┘
                             │
                             ▼
                    ┌─────────────────┐        1002
                    │  RECEIVE LOWER   │
                    │ RESOLUTION IMAGE │
                    └────────┬────────┘
                             │
                             ▼
                    ┌─────────────────┐        1004
                    │ GENERATE FIRST   │
                    │ HIGHER           │
                    │ RESOLUTION IMAGE │
                    └────────┬────────┘
                             │
                             ▼
                    ┌─────────────────┐        1006
                    │ GENERATE         │
                    │ REFINEMENT       │
                    │ LAYER            │
                    └────────┬────────┘
                             │
                             ▼
                    ┌─────────────────┐        1008
                    │ GENERATE SECOND  │
                    │ HIGHER           │
                    │ RESOLUTION IMAGE │
                    └────────┬────────┘
                             │
                             ▼
                    ┌─────────────────┐
                    │       END        │
                    └─────────────────┘
```

# FIG. 10

FIG. 11A

FIG. 11B

1200

1202

Processor

Memory
1204

I/O
Interface
1206

Network
Interface
1208

# FIG. 12

Europäisches Patentamt

European Patent Office

Office européen des brevets

**EUROPEAN SEARCH REPORT**

Application Number

EP 24 20 2376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ESMAEILZEHI ALIREZA ET AL: "MuRNet: A deep recursive network for super resolution of bicubically interpolated images", SIGNAL PROCESSING. IMAGE COMMUNICATION, ELSEVIER SCIENCE PUBLISHERS, AMSTERDAM, NL, vol. 94, 13 March 2021 (2021-03-13), XP086533972, ISSN: 0923-5965, DOI: 10.1016/J.IMAGE.2021.116228 [retrieved on 2021-03-13] | 1-15 | INV. G06T3/4046 G06T3/4053 |
| Y | * Sec. 1, 2.1 * | 12 | |
| X | CN 117 057 993 A (GUANGZHOU BIGO INFORMATION TECH CO LTD) 14 November 2023 (2023-11-14) | 1-15 | |
| Y | * para. bridging p.4-5; penultimate para. on p.6; para. bridging p.7-8; bottom 3 paragraphs on p.8 and 1.para. on p.9 concerning steps S220-S230; para. bridging p.10-11 concerning step S203 * | 12 | |
| X | CN 111 260 558 B (UNIV WUHAN) 22 October 2021 (2021-10-22) | 1-8, 10-15 | TECHNICAL FIELDS SEARCHED (IPC)<br><br>G06T |
| Y | * p.1, 5.para.; p.2, from para. [8]; p.3, 3.para.; p.6, from 5.para. * | 12 | |
| Y | CN 106 683 048 B (ZHEJIANG UNIVIEW TECH CO LTD) 1 September 2020 (2020-09-01) * paragraph [0106] - paragraph [0108] * | 12 | |
| Y | CN 109 214 985 A (UNIV CHANGSHA SCI & TECH) 15 January 2019 (2019-01-15) * paragraph [0016] * | 12 | |

The present search report has been drawn up for all claims

| Place of search | Date of completion of the search | Examiner |
|---|---|---|
| Munich | 18 February 2025 | Fischer, Jan |

EPO FORM 1503 03.82 (P04C01)

## ANNEX TO THE EUROPEAN SEARCH REPORT
## ON EUROPEAN PATENT APPLICATION NO.

EP 24 20 2376

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2025

| Patent document cited in search report | | Publication date | Patent family member(s) | Publication date |
|---|---|---|---|---|
| CN 117057993 | A | 14-11-2023 | NONE | |
| CN 111260558 | B | 22-10-2021 | NONE | |
| CN 106683048 | B | 01-09-2020 | NONE | |
| CN 109214985 | A | 15-01-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R. TIMOFTE et al.** NTIRE 2018 challenge on single image super-resolution: Methods and results. *2018 IEEEICVF Conference on Computer Vision and Pattern Recognition Workshops (CVPRW)*, 2018, 965-96511
- **C. LEDIG** ; **L. THEIS** ; **F. HUSZÃ¡R** ; **J. CABALLERO** ; **A. CUNNINGHAM** ; **A. ACOSTA** ; **A. AITKEN** ; **A. TEJANI** ; **J. TOTZ** ; **Z. WANG**. Photo-realistic single image super-resolution using a generative adversarial network. *2017 IEEE Conference on Computer Vision and Pattern Recognition (CVPR)*, 2017, 105-114
- Esrgan: Enhanced super-resolution generative adversarial networks. **X. WANG** ; **K. YU** ; **S. WU** ; **J. GU** ; **Y. LIU** ; **C. DONG** ; **Y. QIAO** ; **C. C. LOY**. Computer Vision - ECCV 2018 Workshops. Springer International Publishing, 2019, 63-79
- **K. HE** ; **X. ZHANG** ; **S. REN** ; **J. SUN**. Deep residual learning for image recognition. *2016 IEEE Conference on Computer Vision and Pattern Recognition (CVPR)*, 2016, 770-590
- **KAREN SIMONYAN** ; **ANDREW ZISSERMAN**. Very deep convolutional networks for large-scale image recognition. *International Conference on Learning Representations*, 2015
- **A. LUGMAYR** ; **M. DANELLJAN** ; **L. V. GOOL** ; **R. TIMOFTE**. Sr-flow: Learning the super-resolution space with normalizing flow. *Computer Vision - ECCV 2020: 16th European Conference, Glasgow, UK, August 23-28, 2020, Proceedings, Part V*, 23 August 2020, 715-732
- **R. ZHANG** ; **P. ISOLA** ; **A. EFROS** ; **E. SHECHTMAN** ; **O. WANG**. The unreasonable effectiveness of deep features as a perceptual metric. *2018 IEEE/CVF Conference on Computer Vision and Pattern Recognition*, 2018, 586-595